# EUROPEAN PATENT APPLICATION

(11) **EP 3 988 216 A1**
(43) Date of publication of application: **27.04.2022**
(21) Application number: 20875665.0
(22) Date of filing: 04.09.2020
(51) Int. Cl.: B04C 5/04, B04C 5/103, B04C 5/12

(54) **METHOD FOR DISCHARGING DUST BY USING CYCLONE SEPARATION**

(30) Priority: 02.09.2020 CN 202010910015
(71) Applicant: Fornice Intelligent Technology Co, Ltd., Dongguan, Guangdong 523339 (CN)
(72) Inventor: CAI, Zhan, Guangdong 523339 (CN); ZHU, Liwen, Guangdong 523339 (CN)
(74) Representative: Ipside
(86) International application number: PCT/CN2020/113467
(87) International publication number: WO 2022/047731

(57) **Abstract**

The invention discloses a method for cyclonic separation and discharging of dust, including the following steps: guiding air with particles to form an airflow consistent with a tangential direction of a cyclonic separating drum and then making the airflow enter the cyclonic separating drum tangentially to form a rotating airflow; and changing a direction of a centripetal force of the rotating airflow to above a side of a direction of a support force of a drum wall of the cyclonic separating drum or adjusting the direction of the support force of the drum wall of the cyclonic separating drum to below the side of the direction of the centripetal force of the rotating airflow, thus enabling the particles to be subjected to a downward component force directed towards a dust discharge port of the cyclonic separating drum to pull and discharge separated particles. The method for cyclonic separation and discharging of dust of the invention can effectively discharge the separated particles to the outside of the dust discharge port timely and quickly, not only solve the technical problem but also avoid the possibility of back mixing and diffusion caused by the accumulated particles, and meanwhile, ensure that the cyclonic separating drum is in a clean state without particle accumulation to help to improve the separation and purification effect as well as prolong the service life.

## Description

### Technical Field

The present invention relates to the technical field of cyclonic separation, and in particular to a method for cyclonic separation and discharging of dust.

### Background of the Invention

Cleaning appliances with cyclonic separating apparatus, such as vacuum cleaners, are known in the prior art. Generally, in a cyclonic vacuum cleaner, air carrying dirt and dust enters a first cyclonic separator through a tangential inlet, and the dirt is separated under the action of a centrifugal force into a collecting cavity. Cleaner air flows out from the collecting cavity to enter a second cyclonic separator which can separate finer dirt, dust and other particles compared with the first cyclonic separator. The existing second cyclonic separator mainly includes a cyclonic separating drum and an overflow drum, there is a suitable space between the cyclonic separating drum and the overflow drum so that dust-containing gas forms a rotating airflow zone therebetween, and particles with large mass are thrown towards a drum wall under the action of a centrifugal force. The gas forms a vortex, flows to an inner drum with a lower pressure, and finally is discharged upward from the overflow drum, which plays a role in dust removal and purification.

Existing vacuum cleaners with two-stage cyclonic separation mainly focus on how to improve separation effects of dust particles from air. For example, a vacuum cleaner is disclosed in a Chinese patent for invention (publication No. CN105030148A, published on November 11, 2015), and a cyclonic separating apparatus is disclosed in a Chinese patent for invention (publication No. CN101816537, published on September 1, 2010). However, the inventor found that although the existing two-stage cyclonic separation can effectively improve the separation effects of dust from air, a cyclonic separating drum of a downstream cyclonic separating assembly accumulates a large amount of dust, and there is also dust accumulation outside the overflow drum. The main reason is that the separated dust is difficult to be discharged only by its own gravity to a dust outlet, resulting in accumulation of a large amount of dust in a cyclonic separating outer drum and further a possibility of back mixing and diffusion to escape to the outside of the overflow drum. Therefore, how to discharge the particles separated timely and quickly to the dust outlet is a technical problem in the prior art.

### Summary of the Invention

In order to solve the above problem, the present invention provides a method for cyclonic separation and discharging of dust.

In order to achieve the above objectives, the present invention adopts the following technical solutions.

A method for cyclonic separation and discharging of dust includes the following steps: guiding air with particles to form an airflow consistent with a tangential direction of a cyclonic separating drum and then making the airflow enter the cyclonic separating drum tangentially to form a rotating airflow; and changing a direction of a centripetal force of the rotating airflow to above a side of a direction of a support force of a drum wall of the cyclonic separating drum or adjusting the direction of the support force of the drum wall of the cyclonic separating drum to below the side of the direction of the centripetal force of the rotating airflow, so that the particles are subjected to a downward component force directed towards a dust discharge port of the cyclonic separating drum to pull and discharge the particles separated.

As a preferred embodiment of the method for cyclonic separation and discharging of dust provided by the present invention, the step of guiding air with particles to form the airflow consistent with the tangential direction of the cyclonic separating drum and then making the airflow enter the cyclonic separating drum tangentially to form the rotating airflow is realized by communicating an upper side edge of the cyclonic separating drum with a tangential air duct.

As a preferred embodiment of the method for cyclonic separation and discharging of dust provided by the present invention, the step of changing the direction of the centripetal force of the rotating airflow to above the side of the direction of the support force of the drum wall of the cyclonic separating drum is realized by arranging a centripetal force redirecting duct in an upper portion of the cyclonic separating drum.

As a preferred embodiment of the method for cyclonic separation and discharging of dust provided by the present invention, the tangential air duct has an airflow guide path.

As a preferred embodiment of the method for cyclonic separation and discharging of dust provided by the present invention, an outer side wall of the tangential air duct is a planar side wall, and is tangent to a side edge of a cylindrical drum of the cyclonic separating drum; or, the outer side wall of the tangential air duct is a curved side wall, and is tangent to the side edge of the cylindrical drum of the cyclonic separating drum.

As a preferred embodiment of the method for cyclonic separation and discharging of dust provided by the present invention, an inner side wall of the tangential air duct is a planar side wall or a curved side wall.

As a preferred embodiment of the method for cyclonic separation and discharging of dust provided by the present invention, the centripetal force redirecting duct is a spirally extending curved duct whose spiral rise angle A is greater than a half cone angle a of a down standing cone drum of the cyclonic separating drum.

As a preferred embodiment of the method for cyclonic separation and discharging of dust provided by the present invention, a lead of the curved duct is set to be less than one.

As a preferred embodiment of the method for cyclonic separation and discharging of dust provided by the present invention, the curved duct is set to have at least 1/4 lead.

As a preferred embodiment of the method for cyclonic separation and discharging of dust provided by the present invention, the step of adjusting the direction of the support force of the drum wall of the cyclonic separating drum to below the side of the direction of the centripetal force of the rotating airflow is realized by adjusting a down standing cone drum of the cyclonic separating drum to an upstanding cone drum.

The present invention has the following beneficial effects.
when the airflow is rotating, the particles in the airflow only suffer from the support force (a resultant force) provided by one drum wall in the case of ignoring the influence of gravity; due to the presence of rotating motion, the support force (the resultant force) is inevitably decomposed into a centripetal force (a first component) perpendicular to a rotating axis and the other second component; in order to ensure the decomposition balance of the resultant force, the first component force and the second component force need to exist on both sides of the support force (the resultant force) to ensure the decomposition balance of the resultant force; the direction of the centripetal force of the rotating airflow is changed to above the side of the direction of the support force of the drum wall of the cyclonic separating drum, or the direction of the support force of the drum wall of the cyclonic separating drum is adjusted to below the side of the direction of the centripetal force of the rotating airflow, that is, the direction of the centripetal force of the rotating airflow is located above the side of the direction of the support force of the drum wall of the cyclonic separating drum, and the direction of the second component force in balance with the centripetal force (the first component force) is adjusted to be downward, which is conductive to making the particles flow to the outside of the dust discharge port under the traction of the downward component force (the second component force). Therefore, the method for cyclonic separation and discharging of dust of the present invention can effectively discharge the separated particles to the outside of the dust discharge port timely and quickly, not only solve the technical problem described in the above background, but also avoid the possibility of back mixing and diffusion caused by the accumulated particles, and meanwhile, ensure that the cyclonic separating drum is in the clean

state without dust accumulation to help to improve the separation and purification effect and prolong the service life.

### Brief description of the Drawings

Fig. 1 is a structural schematic diagram of a cyclonic separator in Embodiment 1 of the present invention;
Fig. 2 is a schematic diagram of decomposition of Fig. 1;
Fig. 3 is a schematic diagram of decomposition of the cyclonic separator in another state of Embodiment 1 of the present invention;
Fig. 4 is a partial section view of the cyclonic separator of Embodiment 1 of the present invention, in which a section view of a cylindrical drum and a down standing cone drum is shown;
Fig. 5 is a schematic diagram of stress analysis of particles in a rotating airflow without a redirecting duct in the prior art;
Fig. 6 is a schematic diagram of stress analysis of particles in a rotating airflow with a redirecting duct of Embodiment 1 of the present invention;
Fig. 7 is a schematic diagram of stress analysis of particles in the rotating airflow with the redirecting duct of Embodiment 1 of the present invention;
Fig. 8 is a structural schematic diagram of a cyclonic separating drum and a tangential air duct in Embodiment 1 of the present invention;
Fig. 9 is a schematic diagram of an implementation state of an overflow drum with a curved duct in Embodiment 1 of the present invention;
Fig. 10 is a schematic diagram of another implementation state of the overflow drum with the curved duct in Embodiment 1 of the present invention;
Fig. 11 is a schematic diagram of another implementation state of the overflow drum with the curved duct in Embodiment 1 of the present invention;
Fig .12 is a structural schematic diagram of a cyclonic separating apparatus in Embodiment 3 of the present invention;
Fig. 13 is a structural schematic diagram of a downstream cyclonic separating assembly in Embodiment 3 of the present invention;
Fig. 14 is a schematic diagram of decomposition of the downstream cyclonic separating assembly in Embodiment 3 of the present invention;
Fig. 15 is a schematic diagram of a cyclonic separator support, a cyclonic separating drum and a tangential air duct in Embodiment 3 of the present invention;
Fig. 16 is a section view of the downstream cyclonic separating assembly in Embodiment 3 of the present invention;
Fig. 17 is another schematic diagram of decomposition of the downstream cyclonic separating assembly in Embodiment 3 of the present invention;
Fig. 18 is a schematic diagram of decomposition of Fig. 12;
Fig. 19 is a section view of Fig. 12 in which thick solid lines and thick dashed lines with arrows indicate airflow paths; and
Fig. 20 is a schematic diagram of stress analysis of particles in an airflow of a cyclonic separator in which a down standing cone drum is changed to an upstanding cone drum in Embodiment 2 of the present invention.

### Detailed Description of Embodiments

In order to enable those skilled in the art to better understand the solutions of the present invention, the technical solutions of the embodiments of the present invention will be described clearly and comprehensively with reference to the accompanying Drawings of the embodiments of the present invention. Obviously, the described embodiments are only part of the embodiments of the present invention instead of all of the embodiments. Based on the described embodiments of the present invention, all other embodiments obtained by those skilled in the art without creative labor should fall within the protection scope of the present invention.

### Embodiment 1

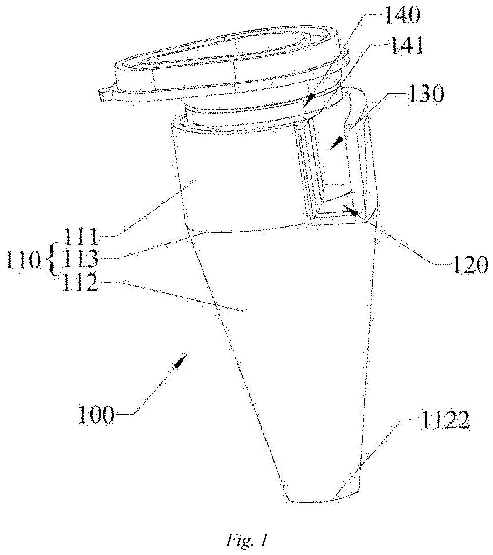

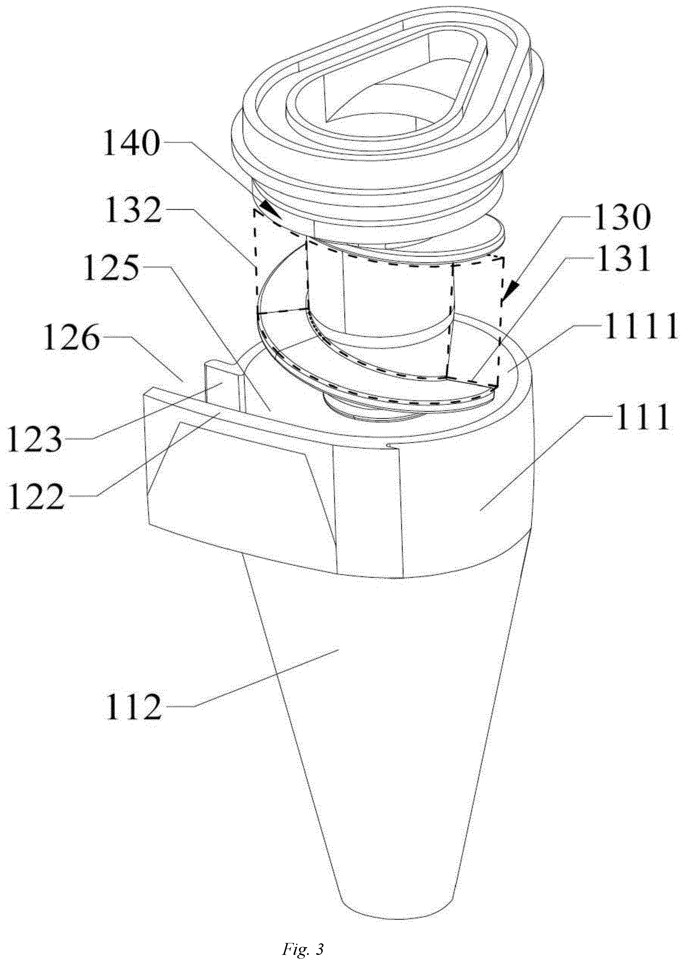

In view of the technical problems in the prior art, referring to Figs. 1-11, the present invention provides a cyclonic separator 100, including:
a cyclonic separating drum 110 of which an upper side edge communicates with a tangential air duct 120, wherein the tangential air duct 120 has an airflow guide path and is tangent to a side edge of the cyclonic separating drum 110 to guide air with particles to form an airflow consistent with a direction of the tangential air duct 120, and then the airflow enters the cyclonic separating drum 110 tangentially to form a rotating airflow, i.e., a cyclonic airflow; and
a centripetal force redirecting duct arranged in an upper portion of the cyclonic separating drum 110 and communicating with the tangential air duct 120, so that after the rotating airflow enters the centripetal force redirecting duct, a direction of a centripetal force of the rotating airflow is changed to above a side of a direction of a support force of a drum wall of the cyclonic separating drum 110.

The cyclonic separating drum 110 includes a cylindrical drum 111 and a down standing cone drum 112; a bottom of the cylindrical drum 111 communicates with an upper portion of the down standing cone drum 112, and an upper portion of the cylindrical drum 111 is an open end 1111 which is convenient for assembling an overflow drum 140; a side edge of the cylindrical drum 111 is provided with an opening 1112 with which the tangential air duct 120 communicates to realize a tangential connection between the tangential air duct 120 and the cylindrical drum 111; a wide opening end 1121 in the upper portion of the down standing cone drum 112 is connected to a lower portion of the cylindrical drum 111 so that the cylinder drum 111 communicates with the down standing cone drum 112. A narrow opening end 1122 in a lower portion of the down standing cone drum 112 is a dust discharge port for allowing separated particles to be discharged therethrough.

The cyclonic separator 100 further includes the overflow drum 140 which is arranged in the upper portion of the cyclonic separating drum 110 about a same axis 150 to serve as an exhaust outlet to allow the separated airflow to leave the cyclonic separating drum 110. The overflow drum 140 is inserted through the open end 1111 of the cylindrical drum 111 and is arranged coaxially with the cylindrical drum 111.

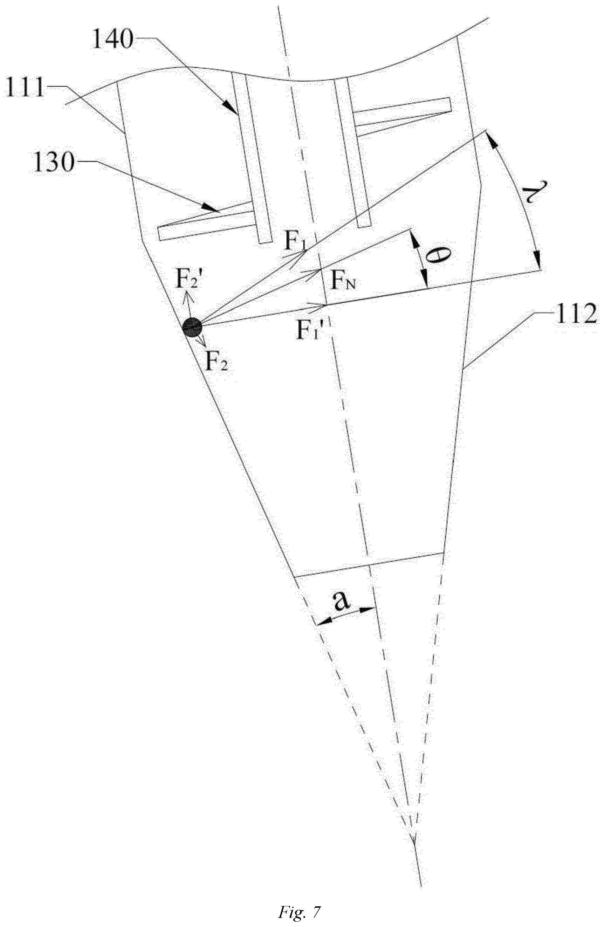

As a preferred embodiment, the centripetal force redirecting duct is a spirally extending curved duct 130 whose spiral rise angle A is greater than a half cone angle a of the down standing cone drum 112 of the cyclonic separating drum 110, as shown in Fig. 7.

It should be noted that when a ratio V²/R of a high-speed rotating airflow and material velocity V to a rotating radius R is much greater than a gravity acceleration g, the centripetal force M*V²/R of pollen-grade particles is much greater than gravity Mg of the material itself. In order to facilitate analysis, the influence of particle gravity is ignored.

When the airflow is rotating, under the circumstance of ignoring the influence of gravity, the particles in the airflow are only subjected to a support force N (a resultant force, F_{N}) provided by a drum wall. Because of the presence of rotating motion, the support force N is inevitably decomposed into a centripetal force (a first component force, F₁, F₁') perpendicular to the rotating axis 150, the first component force is used to maintain a high-speed rotation motion of the particles and a direction of the first component force is perpendicular to the airflow rotating center axis 150. Since the support force N is perpendicular to a drum wall of the down standing cone drum 112, according to decomposition of vectors of the force, in order to maintain the balance of the vectors of the support force N and the centripetal force F₁ and F₁', another component force (a second component force) and the centripetal force F₁ and F₁' certainly straddle separately on both sides of the support force N to ensure the balance of the decomposition of the resultant force.

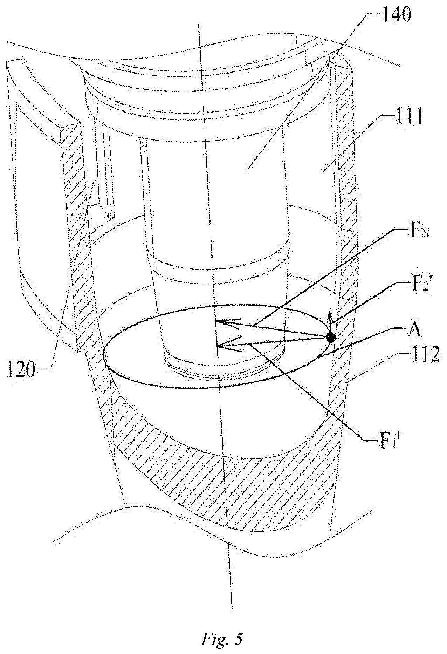

Referring to Fig. 5, before the centripetal force redirecting duct is provided, a rotating plane A of a rotating airflow at a certain place is perpendicular to the axis 150 of the cyclonic separating drum 110, and the direction of the centripetal force (the component force F₁') does not change, i.e., pointing to the center of the rotating plane A and below the direction of the support force F_{N} of the drum wall, an included angle between the centripetal force F₁' and the support force F_{N} of the drum wall is Θ, then according to the balance of the decomposition of the resultant force, a component force F₂' in balance with the component force F₁' is always upward. It can be understood that, under this stress, the particles rotating at high speed do not suffer from any traction power that may discharge the particles downwards from the down standing cone drum 112. In other words, there is no acting force to discharge the particles from the cyclonic separating drum 110. In this case, the particles that cannot be discharged can only accumulate on the drum wall of the cyclonic separating drum 110.

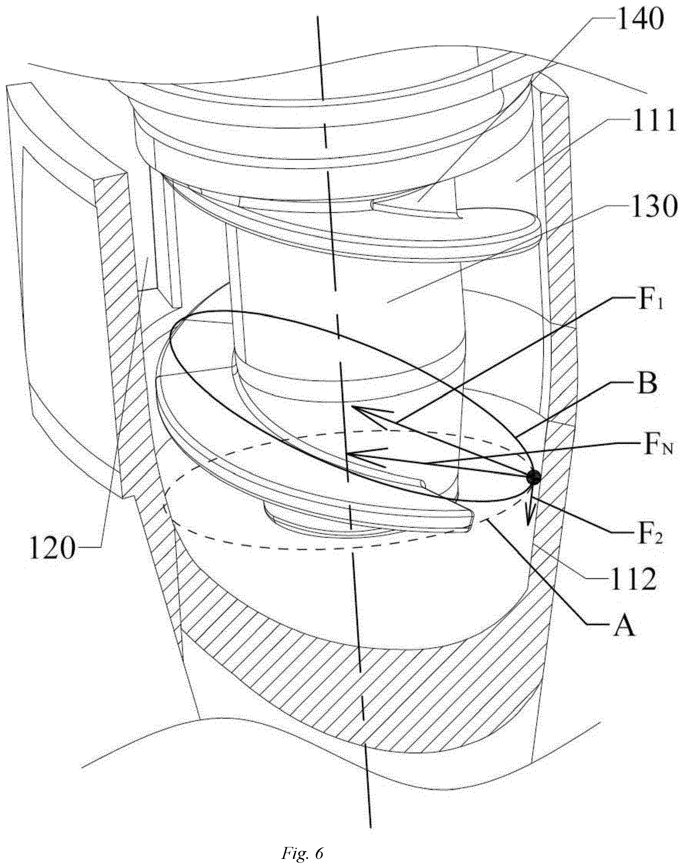

Referring to Figs. 6 and 7, when the centripetal force redirecting duct is provided, the airflow flows out from a tangential air outlet 125 of the tangential air duct 120 with an airflow guide path to form a rotating airflow along the drum wall of the cylindrical drum 111. Since the tangential air outlet 125 corresponds to an entrance 131 of the curved duct 130, when the rotating airflow is formed, the rotating airflow enters the curved duct 130 that has a centripetal force redirection effect. Due to the curved duct 130 and limitations that the spiral rise angle A is greater than the half cone angle a of the down standing cone drum 112 of the cyclonic separating drum 110, after the rotating airflow enters the down standing cone drum 112 through an exit 132 of the curved duct 130, the direction of the centripetal force of the rotating airflow deflects from an original direction perpendicular to the rotating axis 150 and forms an upward included angle with the direction of the support force F_{N} of the drum wall of the down standing cone drum 112. It should be understood that by setting the redirecting duct, an airflow rotating plane B forming an upward included angle (being the spiral rise angle A) with the direction of the centripetal force F₁' without the redirecting duct is provided in a three-dimensional space, that is, the direction of the centripetal force F₁ of the particles in the rotating airflow is changed to above the support force F_{N} provided by the drum wall of the down standing cone drum 112. Similarly, according to the principle of mechanical stress analysis, the particles in the rotating airflow still only suffer from the support force N (the resultant force, F_{N}) provided by the drum wall of the down standing cone drum 112, the first component force of the support force F_{N} is the centripetal force F₁ that maintains a high-speed rotation motion of the particles, the direction of the centripetal force F₁ is changed from the direction perpendicularly pointing to the airflow rotating center axis 150 to an airflow rotating plane in the direction forming the upward included angle in the three-dimensional space. Since the support force F_{N} is perpendicular to the drum wall of the down standing cone drum 112, according to the decomposition of the vectors of the force, in order to maintain the balance of the vectors of the support force F_{N} of the resultant force and the centripetal force F₁, inevitably, the other component force F₂ and the centripetal force F₁ respectively straddle on both sides of the support force F_{N} of the resultant force. Thus, after the rotating airflow flows through the redirecting duct, the direction of the other component force F₂ applied to the particles in the rotating airflow is downward. It can be understood that under the stress, the particles rotating at a high speed move downward under the traction of a downward component force. Therefore, inevitably, the particles separated from the airflow can be discharged from the down standing cone drum 112 to the outside of the dust discharge port.

In this way, the cyclonic separator 100 of the present invention can effectively discharge the separated particles to the outside of the dust discharge port timely and quickly through a combination of the tangential air duct 120 and the redirecting duct, not only solve the technical problem described in the background, but also avoid possibility of back mixing and diffusion caused by the accumulated particles, and meanwhile ensure that the cyclonic separating drum is in a clean state without particle accumulation to help to improve the separation and purification effect as well as prolong the service life. If there is no tangential air duct 120, when a lead of the redirecting duct is less than one lead, not only can a cyclone not be formed, but also there is a possibility that the airflow is not separated and is directly sucked away through the overflow drum 140. When the lead of the redirecting duct is larger than one lead or even more, it only plays a role in forming a cyclone, and does not impose any traction effect on the rapid discharge of the accumulated particles.

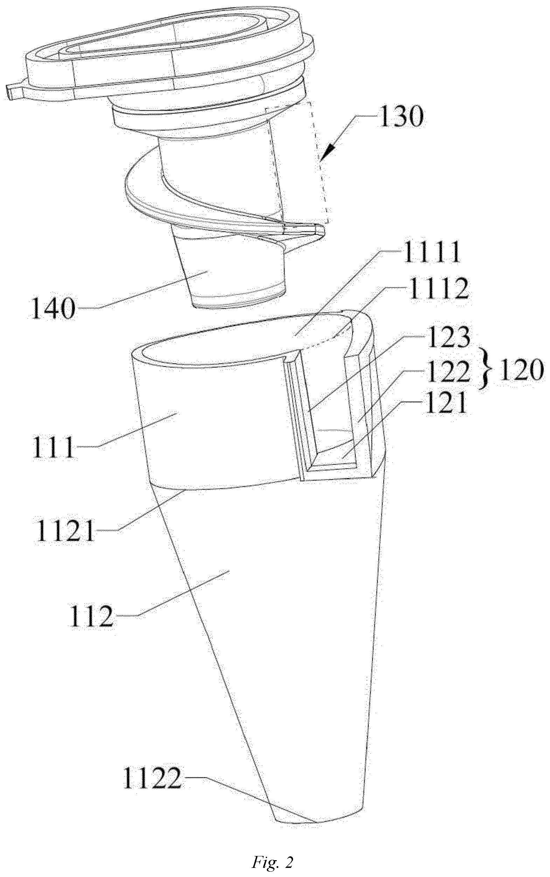

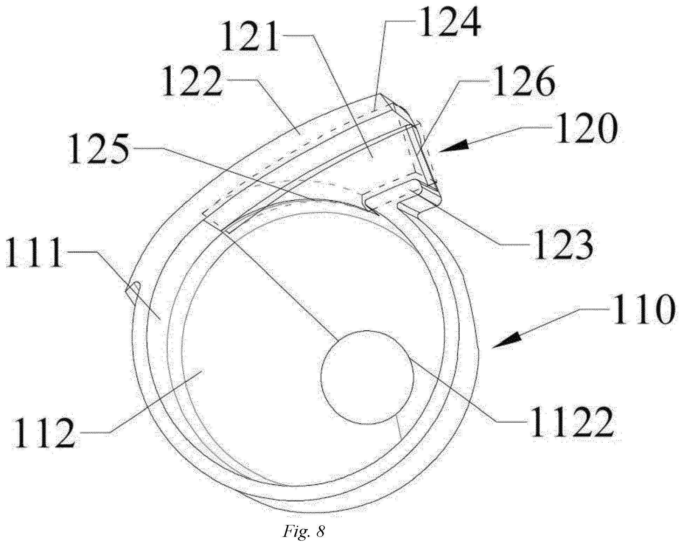

Referring to Figs. 2 and 8, the tangential air duct 120 includes a lower wall 121 and an outer side wall 122 and an inner side wall 123 respectively connected to both sides of the lower wall 121, an air duct groove 124 with a certain distance, i.e., the airflow guide path, is formed by two side walls (the inner side wall 123 and the outer side wall 122) and the lower wall 121 to guide the air with particles into the airflow consistent with the direction of the tangential air duct 120. One end of the air duct groove 124 is connected to the opening 1112 in the side edge of the cylindrical drum 111 as the tangential air outlet 125, the outer side wall 122 of the tangential air duct 120 is connected with one side of the opening 1112, and the inner side wall 123 is connected with the other side of the opening 1112 and is tangent to the side edge of the cylindrical drum 111, so that the airflow consistent with the direction of the tangential air duct 120 enters the cylindrical drum 111 of the cyclonic separating drum 110 tangentially to form the rotating airflow.

Referring to Figs. 2-4, the entrance 131 of the curved duct 130 corresponds to the tangential air outlet 125 of the tangential air duct 120, which can be understood as that the entrance 131 is located in an extending region of the tangential air duct 120. Further, a height of the tangential air duct 120 is set corresponding to a width of the curved duct 130, and a width of the tangential air duct 120 is set corresponding to a distance between the overflow drum 140 and the cyclonic separating drum 110. The corresponding herein may be understood as being equal or being slightly smaller. Such a design mainly satisfies a direct corresponding communication between the tangential air outlet 125 of the tangential air duct 120 and the curved duct 130, which reduces the energy loss caused by an unnecessary airflow rotating path.

As an embodiment, the outer side wall 122 of the tangential air duct 120 may be set to be a planar side wall and is tangent to the side edge of the cylindrical drum 111 of the cyclonic separating drum 110, and the inner side wall 123 of the tangential air duct 120 may be set to be a planar side wall or a curved side wall. As another embodiment, the outer side wall 122 of the tangential air duct 120 may be set to be a curved side wall, and is tangent to the side edge of the cylindrical drum 111 of the cyclonic separating drum 110, and the inner side wall 123 is a planar side wall or a curved side wall.

Further, the entrance 131 of the curved duct 130 corresponds to the tangential air outlet 125 of the tangential air duct 120 to reduce unnecessary rotating paths to further reduce stress loss. In some embodiments, the exit 132 of the curved duct 130 is provided corresponding to a connection 113 of the cylindrical drum 111 and the down standing cone drum 112. In some other embodiments, the exit 132 of the curved duct 130 may also be provided corresponding to the upper portion of the down standing cone drum 112. By such an arrangement in this way, the rotating airflow may directly enter the down standing cone drum 112 after exiting from the exit 132.

The curved duct 130 is located in a region between the cyclonic separating drum 110 and the overflow drum 140. In some embodiments, the curved duct 130 may be arranged on the cyclonic separating drum 110; in some embodiments, the curved duct 130 may be arranged on the overflow drum 140, i.e., on the outer wall of the overflow drum 140; in some other embodiments, the curved duct 130 is suspended between the cyclonic separating drum 110 and the overflow drum 140 by a support. In order to facilitate manufacturing and assembling, the curved duct 130 may be directly integrated on the cyclonic separating drum 110. More preferably, the curved duct 130 may be formed on the outer wall of the overflow drum 140 to avoid complexity of the structure of the cyclonic separating drum 110, and the curved duct 130 formed on the outer wall of the overflow drum 140 is more convenient to manufacture and assemble and is lower in cost compared with that formed in the overflow drum 140.

In the present invention, the curved duct 130 is not mainly used to form a cyclonic airflow (also called a whirling airflow or a rotating airflow) but is used to change the direction of the centripetal force of the rotating airflow, and a spiral lead of the curved duct 130 is unlike that of a spiral duct forming the cyclonic airflow, which is the more, the better. In some embodiments, the curved duct 130 is set to have a lead less than one, such as 2/3 lead, 1/2 lead, 1/3 lead, 1/4 lead, 1/8 lead or 1/10 lead. In some embodiments, the curved duct 130 may be further set to have more than one lead. In specific implementation, appropriate adjustment may be made according to an insertion depth of the overflow drum 140 into the cyclonic separating drum 110. In order to ensure the redirection effect, the curved duct 130 is preferably set to have at least 1/4 lead, that is, the rotating airflow flows through the curved duct 130 with at least 1/4 lead and is discharged into the down standing cone drum 112. Preferably, the curved duct 130 is preferably set to have 1/4 lead or more and one lead or less, and more preferably, 1/4 lead or more and 1/2 lead or less.

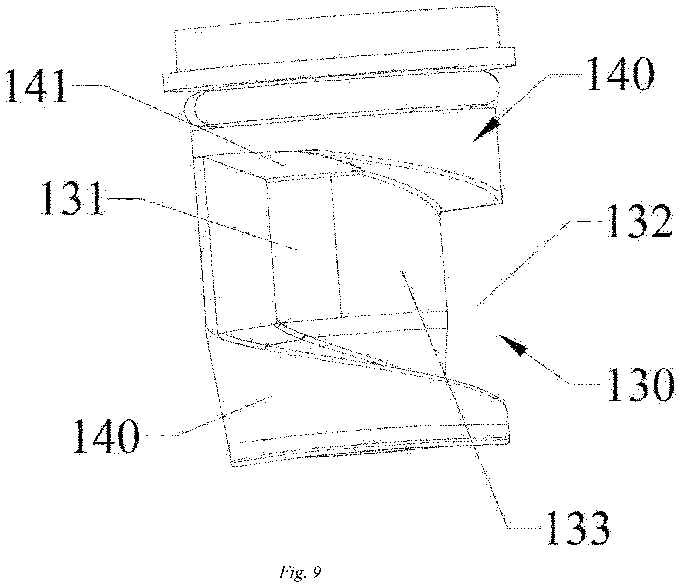

Referring to Figs. 9-11, the curved duct 130 arranged on the outer wall of the overflow drum 140 is taken as an example for detailed description.

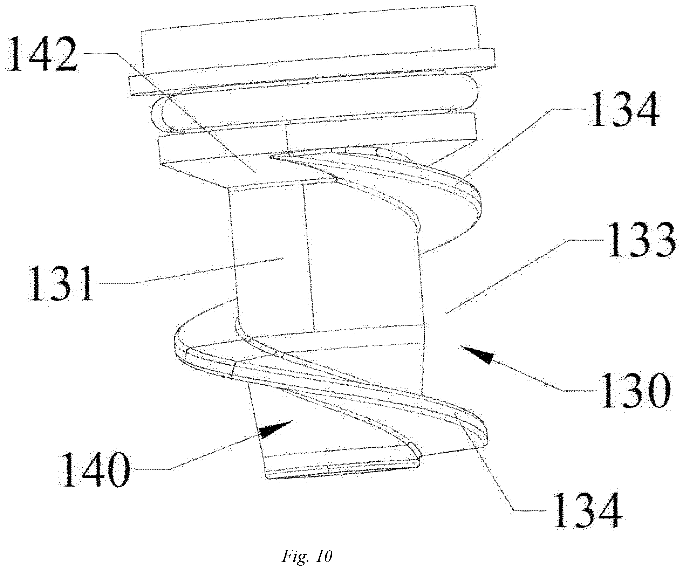

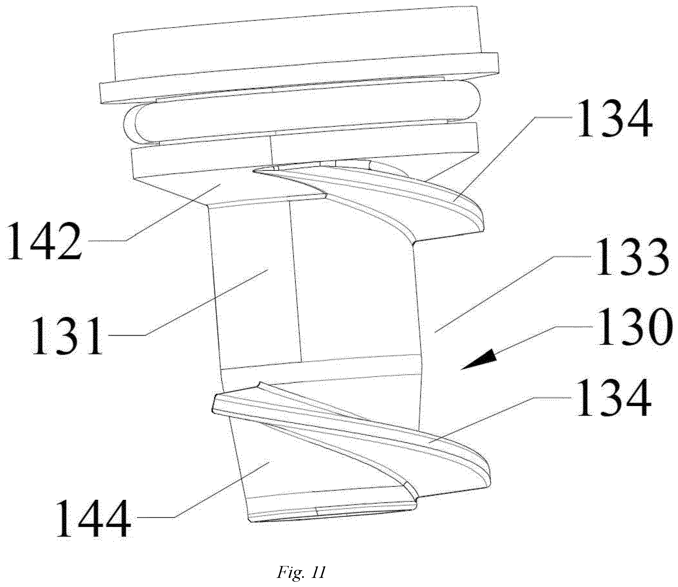

In some embodiments, as shown in Fig. 9, the curved duct 130 may be a groove-shaped duct 133 that is inwardly concave and spirally formed in the outer wall of the overflow drum 140, and the entrance 131 of the curved duct 130 is provided corresponding to the tangential air outlet 125 of the tangential air duct 120. In some embodiments, as shown in Figs. 10 and 11, the curved duct 130 is the groove-shaped duct 133 which is formed between curved ribs 134 protruding outwardly from the outer wall of the overflow drum 140 and is spirally formed, and the entrance 131 of the curved duct 130 is provided corresponding to the tangential air outlet 125 of the tangential air duct 120. The curved ribs 134 may be single-head spiral ribs, as shown in Fig. 10, that is, one spiral rib is arranged on the outer wall of the overflow drum 140, and the groove-shaped duct 133 begins to be formed after one lead of one spiral rib. Preferably, a first lead herein may serve as the entrance 131. The curved ribs 134 may also be multi-head single-screw spiral ribs, as shown in Fig. 11, that is, a plurality of spiral ribs with the same spiral direction are provided on the outer wall of the overflow drum 140. It can be understood that heads of the plurality of the spiral ribs may be provided corresponding to the tangential air outlet 125, that is, the head of one of the spiral ribs is located on the extending plane of an upper wall (which can also be understood as a plane formed by connection of tops of the two side walls) of the tangential air duct 120, and the head of the second spiral rib adjacent to this spiral rib is located on the extending plane of the lower wall 121 of the tangential air duct 120. By an arrangement in this way, the heads of the multi-head spiral ribs at the head may serve as the entrance 131, and exactly correspond to the tangential air outlet 125 of the tangential air duct 120. The heads of the multi-head single-screw spiral ribs may also be arranged above the tangential air outlet 125, but it is only required to satisfy that a spiral groove formed by the multi-head single-screw spiral ribs corresponds to the tangential air outlet 125 of the tangential air duct 120.

Further, referring to Figs. 1 and 9, the cyclonic separator 100 further includes a diversion inclined wall 141 which is provided corresponding to the upper portion of the tangential air duct 120. It can be understood that the diversion inclined wall 141 is provided corresponding to the extending plane of the upper wall of the tangential air duct 120, by means of such a design, the diversion inclined wall 141 prevents part of the rotating airflow flowing through the tangential air duct 120 from rotating on the drum wall at an upper end of the cylindrical drum 111 to avoid forming an "upper dust ring" which not only causes energy loss but also greatly interferes with the separation effect. Preferably, the diversion inclined wall 141 is arranged on the upper portion of the outer wall of the overflow drum 140. In order to facilitate manufacturing, the diversion inclined wall 141 extends circumferentially to form a diversion inverted cone platform 142, as shown in Figs. 10 and 11. Specifically, an obtuse angle is formed between the diversion inclined wall 141 and the outer wall of the overflow drum 140, which helps to guide the rotating airflow downwards to enter the curved duct 130. In some embodiments, arranging the curved duct 130 and the diversion inclined wall 141 on the outer wall of the overflow drum 140 is taken as an example, and the upper end of the curved duct 130 is connected with the diversion inverted cone platform 142, e.g., the upper end of the entrance 131 of the groove-shaped duct 133 or the head of the single-head spiral rib or the head of the uppermost spiral rib of the multi-head single-screw spiral ribs is connected with the diversion inverted cone platform 142. In some preferred embodiments, the connection 113 of the curved duct 130 and the diversion inverted cone platform 142 is located in the extending region of the tangential air duct 120 to avoid or reduce the existence possibility of the "upper dust ring", and at the same time, to reduce the escape of the rotating airflow which is not separated and to help guide the rotating airflow to downward enter the curved duct 130.

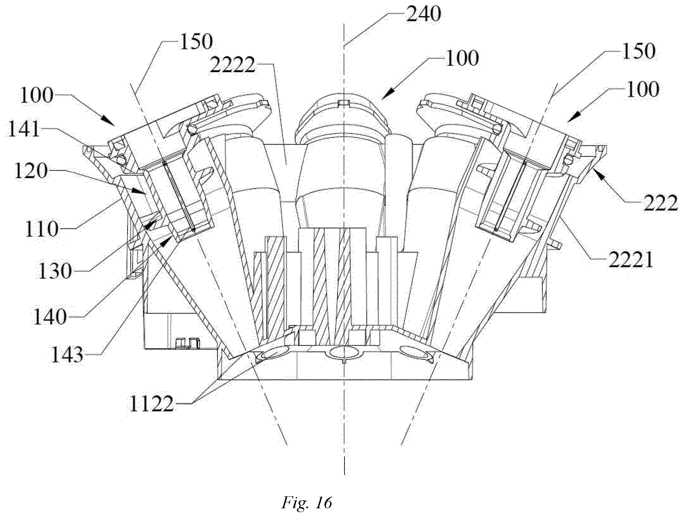

Referring to Fig. 16, the inner wall of the overflow drum 140 is provided with a plurality of flat and long spoiler ribs 143 axially. Preferably, elongated sides of the spoiler ribs 143 are axially connected to the inner wall of the overflow drum 140. Compared with existing arc columnar spoiler ribs 143, the flat and long spoiler ribs 143 can more effectively interfere with an internal rotation state of the airflow to make the airflow be in a linear movement state more quickly and be discharged rapidly. In some preferred embodiments, bottoms of the spoiler ribs 143 do not extend to the bottom of the overflow drum 140, which not only avoids that the spoiler ribs 143 interfere with the airflow not entering the overflow drum 140 to cause the airflow not to become straight quickly to be discharged directly but to flow towards other directions to influence the separation effect, but also does not influence an air inflowing space at the bottom of the overflow drum 140, ensuring that the internal rotating airflow smoothly enters the bottom of the overflow drum 140 and then becomes straight to be discharged quickly through inference from the flat and long spoiler ribs 143.

The bottom of the overflow drum 140 extends to the upper portion of the down standing cone drum 112 of the cyclonic separating drum 110. It can be understood that the bottom of the overflow drum 140 is located at the connection 113 of the cylindrical drum 111 and the down standing cone drum 112 or below the connection 113. In this embodiment, preferably, the bottom of the overflow drum 140 extends into the down standing cone drum 112 and is located in the upper portion of the down standing cone drum 112. In some preferred embodiments, a length of the overflow drum 140 is 0.3 to 0.4 times a length of the cyclonic separating drum 110, which is not limited thereto. The length of the overflow drum 140 is understood to be a distance between the inverted diversion cone platform 142 and the bottom of the overflow drum 140, or a distance from a part parallel and level to the upper wall of the tangential air duct 120 to the bottom of the overflow drum 140.

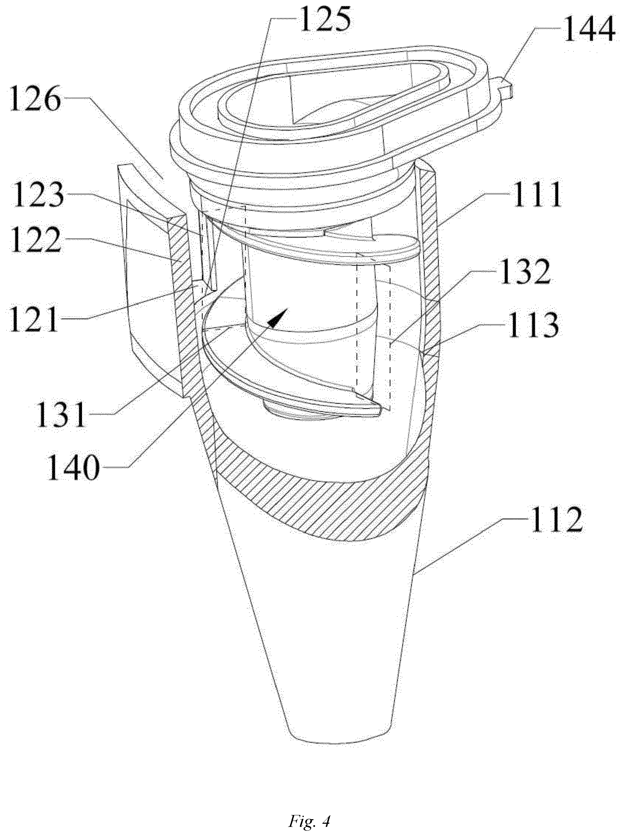

Referring to Fig. 4, the upper portion of the overflow drum 140 is provided with a positioning portion 144 so that the centripetal force redirecting duct communicates with the tangential air duct 120 correspondingly. Through the design of the positioning portion 144, when being assembled, the overflow drum 140 may be quickly positioned and after positioning, it may be ensured that the centripetal force redirecting duct may communicate with the tangential air duct 120 correspondingly, thereby reducing the assembling difficulty and improving the assembling accuracy. It is can be understood that the positioning portion 144 may be designed to cooperate with the cylindrical drum 111. For example, the positioning portion 144 is configured as a buckle, and is buckled into a predetermined blind hole 2231 outside the drum wall of the cylindrical drum 111 by the buckle, but it is not limited hereto.

It should be realized that the tangential air duct 120 may be integrally formed with the cyclonic separating drum 110, the curved duct 130 is integrally formed with the overflow drum 140, and the diversion inverted cone platform 142 and the positioning portion 144 are also integrally formed with the overflow drum 140. Such a design makes the cyclonic separator 100 easy to manufacture and assemble.

### Embodiment 2

The present invention further provides a method for cyclonic separation and discharging of dust, which includes the following steps: guiding air with particles to form an airflow consistent with a tangential direction of a cyclonic separating drum and then making the airflow enter the cyclonic separating drum tangentially to form a rotating airflow; and changing a direction of a centripetal force of the rotating airflow to above a side of a direction of a support force of a drum wall of the cyclonic separating drum or adjusting the direction of the support force of the drum wall of the cyclonic separating drum to below the side of the direction of the centripetal force of the rotating airflow, so that the particles are subjected to a downward component force directed towards a dust discharge port of the cyclonic separating drum to pull and discharge separated particles.

After an existing downstream cyclonic separating assembly in the industry is used for a period of time, a lot of dust is accumulated at a cyclonic separating drum of the downstream cyclonic separating assembly, and dust is also accumulated outside an overflow drum. However, the industry has not paid enough attention to this problem, and mainly pays attention to how to reduce a rotating radius and how to increase the centripetal force or the like to solve the problem of separation efficiency. Through extensive analysis, the inventor has found that the dust accumulation problem mainly results from the fact that the separated dust is difficult to be discharged to the dust discharge port only by its own gravity, to cause a large amount of dust accumulated in an cyclonic separating outer drum to further lead to possibility of back mixing and diffusion to escape to the outside of the overflow drum. Thus how to discharge the separated particles to the dust discharge port timely and quickly is a technical problem in the prior art.

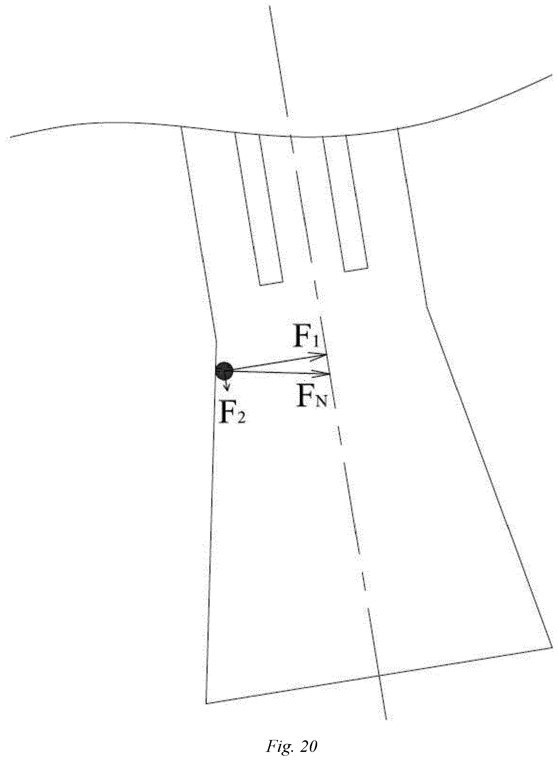

Referring to Fig. 5, under normal circumstances, the direction of the centripetal force (a component force F₁') of the rotating airflow does not change, and is perpendicular to an axis of the cyclonic separating drum, i.e., below the direction of the support force N (F_{N}) of the drum wall. Then according to the balance of decomposition of a resultant force F_{N}, a component force F₂' in balance with the component force F₁' is always upward. It can be understood that under the circumstance of stress, the particles rotating at a high speed do not suffer from any traction power that may discharge the particles downwards from the down standing cone drum. In other words, there is no acting force to discharge the particles from the cyclonic separating drum, and then the particles that cannot be discharged can only accumulate on the drum wall of the cyclonic separating drum. In order to solve the above technical problem, the inventor has found through a lot of experiments that the direction of the centripetal force F₁ of the particles in the rotating airflow is changed to above the support force F_{N} of the drum wall (as shown in Fig. 6) or the direction of the support force F_{N} of the drum wall of the cyclonic separating drum is adjusted to below the side of the direction of the centripetal force F₁ of the rotating airflow (as shown in Fig. 20). Similarly, according to the principle of mechanical stress analysis, the particles in the rotating airflow are still only subjected to one support force N (the resultant force F_{N}) from the drum wall, and a first component force of the support force N is the centripetal force F₁ that maintains the particles in high-speed rotation motion; since the support force N is perpendicular to the drum wall, according to the decomposition of vectors of the force, in order to maintain the balance of the vectors of the support force N of the resultant force and the centripetal force F₁, inevitably, the other component force F₂ and the centripetal force F₁ straddle on both sides of the support force N of the resultant force; and therefore, when the direction of the centripetal force F₁ of the particles in the rotating airflow is changed to above the support force N of the drum wall or the support force N of the drum wall is adjusted to below the side of the direction of the centripetal force of the rotating airflow, the direction of the other component force F₂ applied to the particles in the rotating airflow is downward. It can be understood that under the circumstance of stress, the particles rotating at a high speed move downwards under the traction of a downward component force, and thus the particles separated from the airflow is inevitably discharged from the down standing cone drum to the outside of the dust discharge port.

In this way, the method for cyclonic separation and discharging of dust of the present invention can effectively discharge the separated particles to the outside of the dust discharge port timely and quickly, not only solve the technical problem described in the background but also avoid possibility of back mixing and diffusion caused by the accumulated particles, and meanwhile ensure that the cyclonic separating drum is in a clean state without particle accumulation to help to improve separation and purification effect as well as prolong the service life.

As a preferred embodiment, the method for cyclonic separation and discharging of dust of the present invention may be implemented by the cyclonic separator described in Embodiment 1. Specifically, the step of guiding air with particles to form the airflow consistent with the tangential direction of the cyclonic separating drum and then making the airflow enter the cyclonic separating drum tangentially to form the rotating airflow is realized by communicating the upper side edge of the cyclonic separating drum with the tangential air duct; and the step of changing the direction of the centripetal force of the rotating airflow to above the side of the direction of the support force of the drum wall of the cyclonic separating drum is realized by arranging the centripetal force redirecting duct in the upper portion of the cyclonic separating drum.

As another preferred embodiment, in the method for cyclonic separation and discharging of dust of the present invention, the step of guiding air with particles to form the airflow consistent with the tangential direction of the cyclonic separating drum and then making the airflow enter the cyclonic separating drum tangentially to form the rotating airflow is realized by communicating the upper side edge of the cyclonic separating drum with the tangential air duct; and the step of adjusting the direction of the support force of the drum wall of the cyclonic separating drum to below the side of the direction of the centripetal force of the rotating airflow is realized by adjusting the down standing cone drum of the cyclonic separating drum to the upstanding cone drum, i.e., the narrow opening end is connected with the cylindrical drum of the cyclonic separating drum, and the wide opening end is the dust discharge port. As shown in Fig. 20, the cyclonic separator in this embodiment is different from the cyclonic separator in Embodiment 1 only in that (1) no centripetal force redirecting duct is required; (2) the down standing cone drum is adjusted to the upstanding cone drum.

### Embodiment 3

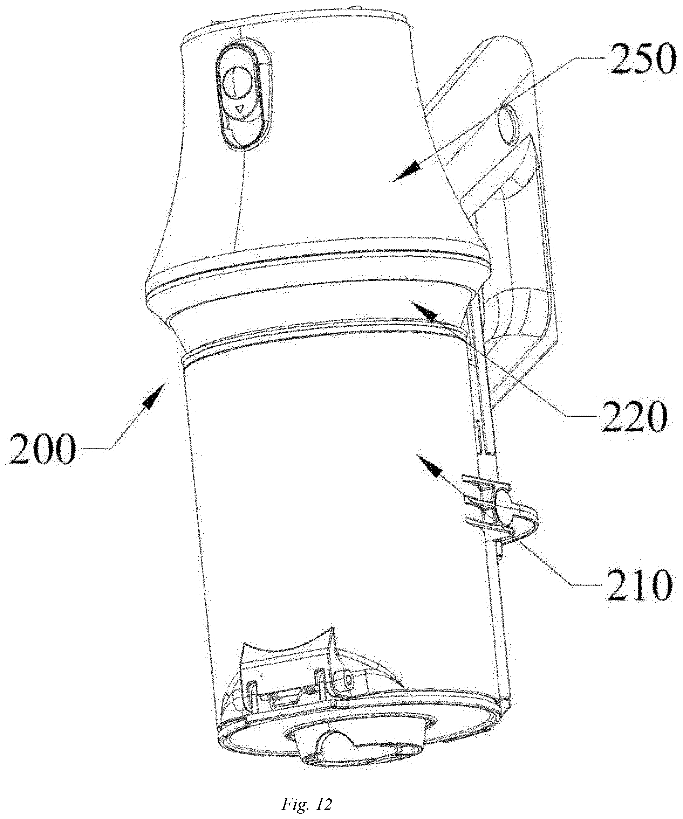

Referring to Figs. 12-19, the present invention further provides a cyclonic separating apparatus, which includes an upstream cyclonic separating assembly 210 and a downstream cyclonic separating assembly 220, wherein the upstream cyclonic separating assembly 210 communicates with the downstream cyclonic separating assembly 220 by an air guide path, the downstream cyclonic separating assembly 220 includes at least one cyclonic separator ring 221, and each cyclonic separator ring 221 includes a plurality of cyclonic separators 100 as described in Embodiment 1.

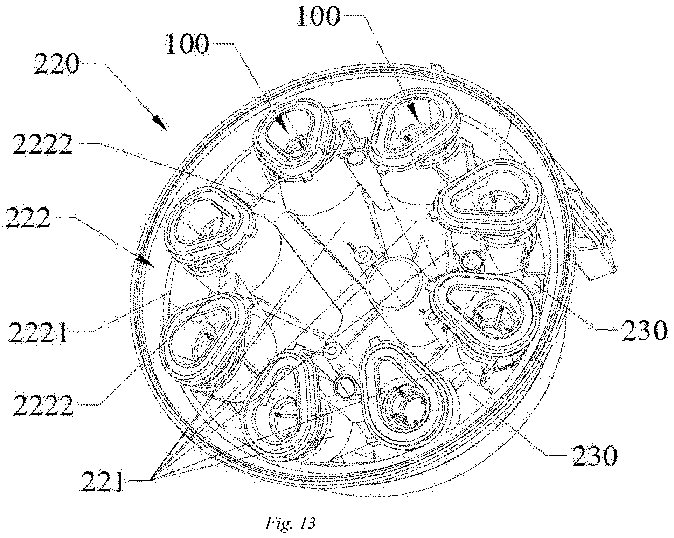

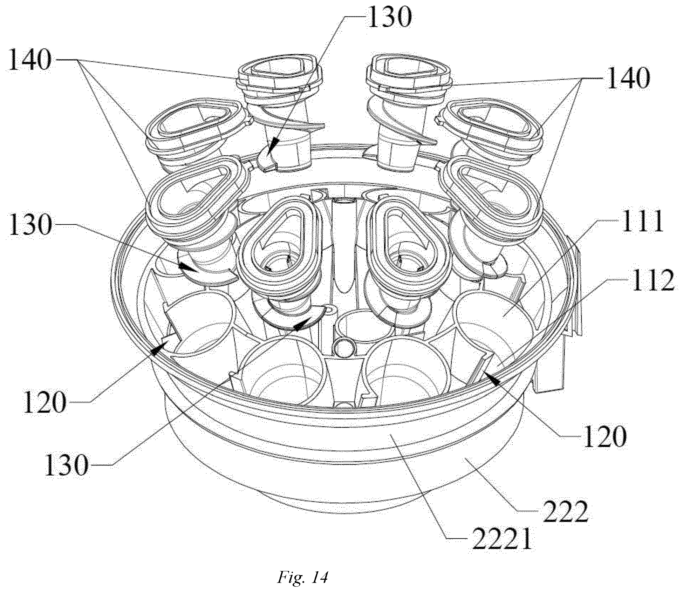

Referring to Figs. 13 and 14, as an embodiment of the arrangement of the cyclonic separators 100, the plurality of cyclonic separators 100 may be arranged in a ring shape to form a set of cyclonic separator rings 221. The cyclonic separators 100 in the cyclonic separator rings 221 are arranged circumferentially along a ring wall 2221 of a cyclonic separator support 222 of the cyclonic separating apparatus. In some embodiments, tangential air ducts 120 of the cyclonic separators 100 are arranged next to the ring wall 2221 of the cyclonic separator support 222. Preferably, the ring wall 2221 of the cyclonic separator support 222 serves as an outer side wall 122 of each tangential air duct 120. By such a structural design, the airflow separated from the upstream cyclonic separating assembly 210 communicating with the downstream cyclonic separating assembly 220 mainly flows downstream along the ring wall 2221 of the cyclonic separator support 222, and may directly be redirected to enter the tangential air ducts 120 after exiting from air introducing ports 230 (that are downstream outlets of the air guide path), thereby shortening the movement path of the airflow to reduce energy loss. In some embodiments, the tangential air ducts 120 of the cyclonic separators 100 are not arranged next to the ring wall 2221 of the cyclonic separator support 222. It can be understood that the air inlets 126 of the tangential air ducts 120 are formed far away from the ring wall 2221 of the cyclonic separator support 222.

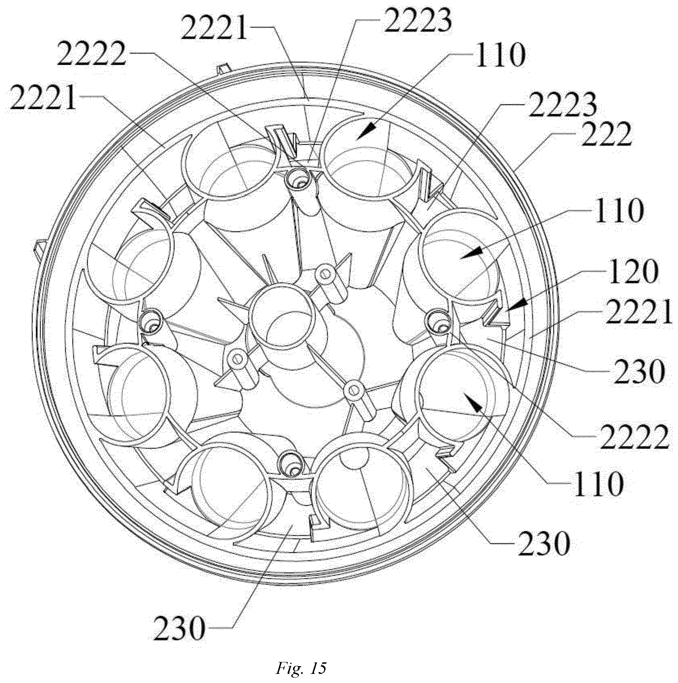

In one of the embodiments, referring to Fig. 15, each of the cyclonic separators 100 of the same one cyclonic separator ring 221 may correspond to one air introducing port 230. That is, one tangential air duct 120 corresponds to one air introducing port 230, and except for the tangential air ducts 120, regions of the air introducing ports 230 are not blocked so as to increase the air introducing quantity. Meanwhile, the tangential air ducts 120 and the air introducing ports 230 are in one-to-one correspondence, thus avoiding collisions of multiple airflows to avoid forming turbulence which mainly causes low efficiency in airflow rotation to further be not beneficial for separation of dust particles from the airflow. In another embodiment, two of the cyclonic separators 100 of the same one cyclonic separator ring 221 may correspond to one air introducing port 230. That is, one air introducing port 230 corresponds to the two tangential air ducts 120, and except for the tangential air ducts 120, the regions of the air introducing ports 230 are not blocked so as to increase the air introducing quantity. Furthermore, the regions on the front sides of the air inlets 126 of the tangential air ducts 120 are not blocked, that is, the airflow can enter the air inlets 126 just after being redirected once at the air introducing ports 230 to avoid that the airflow is redirected for the second time after entry from the air introducing ports 230 and then enters the air inlets 126 again, thereby reducing the energy loss caused by the unnecessary movement path of the airflow.

As another embodiment of the arrangement of the cyclonic separators 100, the plurality of cyclonic separators 100 may be arranged in parallel with each other to form multiple sets of cyclonic separator rings 221, and the multiple cyclonic separators 100 of each set of cyclonic separator rings 221 are circumferentially arranged in a ring shape, and the adjacent sets of cyclonic separator rings 221 are nested or partially embedded in concentric circles. Taking two sets of cyclonic separator rings 221 for example, the first set of cyclonic separator rings 221 is much large in quantity to form a relatively large ring-shaped cyclonic separator ring 221, and the second set of cyclonic separator rings 221 is partially joined in or embedded into the first set of cyclonic separator rings 221. It can be understood that, in a top view, the first set of cyclonic separator rings 221 surrounds the second set of cyclonic separator rings 221, and heights of different sets of cyclonic separator rings 221 may be designed to be the same or different based on actual conditions. In order to further optimize the structure and avoid increasing the volume of the cyclonic separating apparatus, preferably, the smaller ring-shaped cyclonic separator rings 221 are inserted into inner rings of the larger ring-shaped cyclonic separator rings 221 to form a state that the smaller ring-shaped cyclonic separator rings are stacked above the larger ring-shaped cyclonic separator rings in an axial direction, and outer rings of the smaller ring-shaped cyclonic separator rings are partially in contact with or close to the inner rings of the larger ring-shaped cyclonic separator rings.

It should be noted that the function of the plurality of cyclonic separators 100 is that in a certain plane, the more the cyclonic separators 100 are, the smaller the radiuses of the separators 100 are; according to a centripetal force formula F=M*V²/R, it can be seen that the smaller the radius is, the greater the centripetal force is, and the greater the centripetal force is, the better the separation effect of substances in different masses in the airflow is.

Preferably but unlimitedly, an axis 150 of each cyclonic separating drum 110 is provided obliquely with respect to a longitudinal center axis 240 of the cyclonic separating apparatus. It should be noted that not all the cyclonic separators 100 in the same set of cyclonic separator rings 221 need to be inclined at the same angle with respect to the longitudinal center axis 240 of the cyclonic separating apparatus. That is, the cyclonic separators 100 in the same set of cyclonic separator rings 221 may be inclined at different angles with respect to the longitudinal center axis 240 of the cyclonic separating apparatus. Similarly, not all the cyclonic separators 100 in the same set of cyclonic separator rings 221 need to have the same internal dimension.

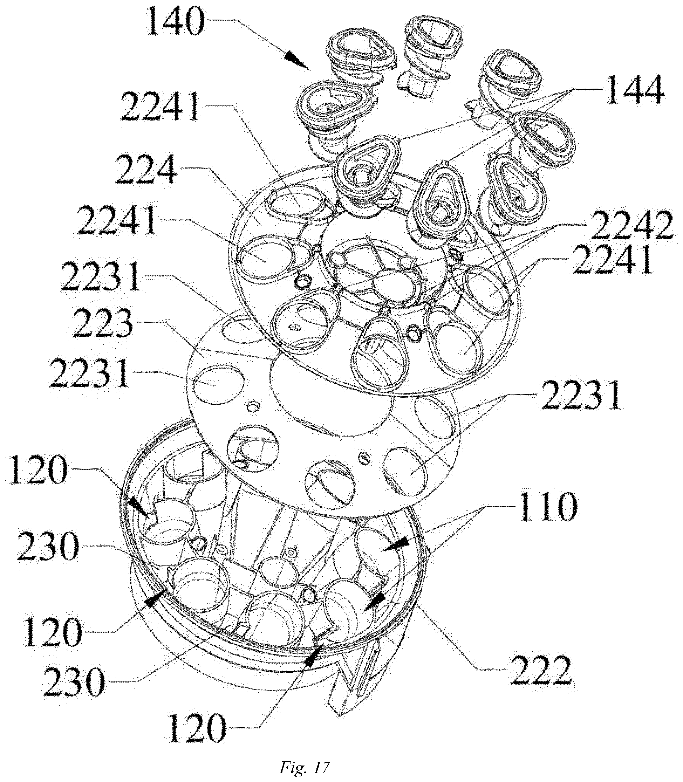

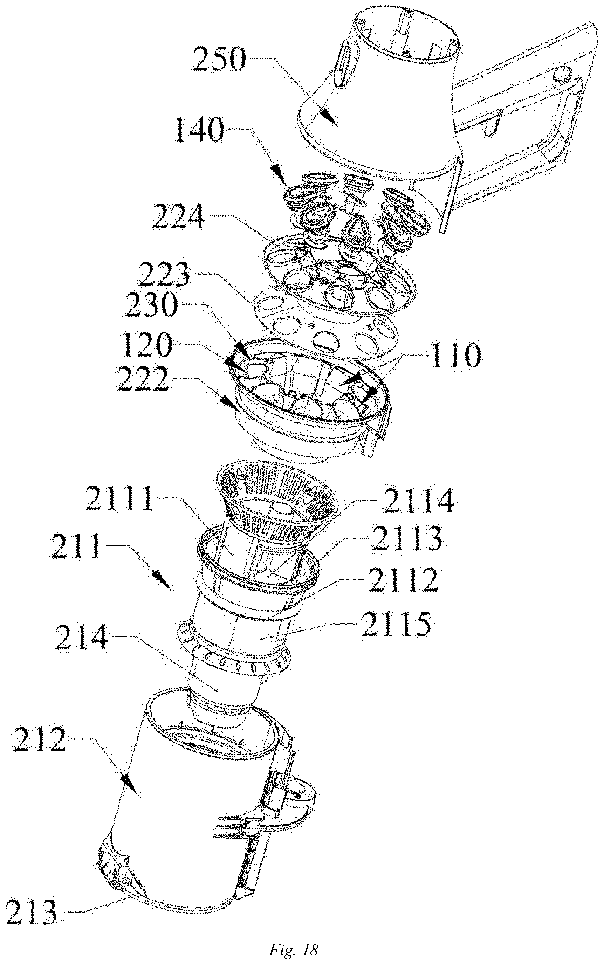

Referring to Figs. 17 and 18, the downstream cyclonic separating assembly 220 further includes a sealing element 223 arranged above the cyclonic separator rings 221. In order to facilitate the assembly of the downstream cyclonic separating assembly 220 and further simplify the structure as well as lighten the cyclonic separating apparatus, upper ends of the tangential air ducts 120 are open, and an upper end of the cyclonic separator support 222 is also open. When assembled, the sealing element 223 is pressed above the cyclonic separator rings 221, i.e., seals at least the upper ends of the tangential air ducts 120 and upper ends of the air introducing ports 230. Preferably, the sealing element 223 is further provided with a plurality of holes 2231 which prop against outer sides of overflow drums 140 in a sealing manner. It can be understood that the sealing element 223 is provided with the holes 2231 to make way for the overflow drums 140 while sealing remaining parts of the cyclonic separator rings 221.

Referring to Figs. 17 and 18, the downstream cyclonic separating assembly 220 further includes a cover plate member 224 arranged on the sealing element 223 to press and limit the sealing element 223. It should be noted that in specific implementation, there may be only the cover plate member 224, or a combination of the sealing element 223 and the cover plate member 224 may be used to enhance airflow tightness and reduce airflow escape. Further, the cover plate member 224 is further provided with a plurality of assembling holes 2241 corresponding to open ends 1111 of the cyclonic separators 110 so as to insert the overflow drums 140 into the assembling holes 2241, so that the overflow drums 140 are partially located in the cyclonic separating drums 110. In order to improve the sealing effect, sealing rings 145 are further arranged on the outer sides, above the sealing element 223, of the overflow drums 140. Preferably, positioning members 2242 are further arranged on side edges of the assembling holes 2241, and are used to position the overflow drums 140 so that the centripetal force redirecting ducts correspondingly communicate with the tangential air ducts 120 after the overflow drums 140 are assembled. Specifically, the positioning members 2242 may cooperate with positioning portions 144 of the overflow drums 140 to form a positioning structure provided between the overflow drums 140 and the cover plate member 224.

The positioning structure includes at least one of a concave-convex positioning structure, a buckle type positioning structure and an elastic fastener type positioning structure, but it is not limited thereto, and it is only required to satisfy quick alignment and positioning. Through the combination of the positioning members 2242 and the positioning portions 144, the overflow drums 140 can be quickly and effectively positioned and limited when being assembled, so that the centripetal force redirecting ducts communicate correspondingly with the tangential air ducts 120 without a need of fastening methods such as screws, which may appropriately lighten the cyclonic separating apparatus while reducing the assembly processes and the difficulty in assembly alignment.

In some embodiments, in the concave-convex positioning structure, the positioning members 2242 are grooves, and the positioning portions 144 are projections. During assembly, after the overflow drums 140 are inserted into the assembling holes 2241, the overflow drums 140 are assembled and positioned when the projections are placed correspondingly in the grooves. In some embodiments, in the concave-convex positioning structure, the positioning members 2242 are L-shaped clamping grooves, the positioning portions 144 are projections. During assembly, after the overflow drums 140 are inserted into the assembling holes 2241, the projections are correspondingly placed in vertical grooves of the clamping grooves, and then the overflow drums 140 are rotated to make the projections enter lateral grooves of the clamping grooves, so that the overflow drums 140 are assembled and positioned. Compared with positioning members 2242 which are only vertical grooves, the positioning members 2242 in this embodiment may further restrict up and down movements of the overflow drums 140 to avoid affecting assembling precision and efficiency. In some embodiments, in the buckle type positioning structure, the positioning members 2242 are clamping positions and the positioning portions 144 are clamping tables, and during assembly, after the overflow drums 140 are inserted into the assembling holes 2241, the clamping tables are correspondingly placed in the clamping positions, so that the overflow drums 140 are assembled and clamped to avoid rotation. In some embodiments, in an elastic fastener type positioning structure, the positioning members 2242 is hooks, and the positioning portions 144 are upper end edges of the overflow drums 140. During assembly, after the overflow drums 140 are inserted into the assembling holes 2241, the upper end edges of the overflow drums 140 pass through the hooks, and after the hooks bounce off and the overflow drums 140 are in place, the hooks return to hook the upper end edges of the overflow drums 140. More preferably, the upper end edges of the overflow drums 140 are provided with hook grooves, which cooperate with the hooks to further clamp the overflow drums 140 to avoid rotation of the overflow drums 140. It should be noted that the specific structures of the above positioning members 2242 and positioning portions 144 may be exchanged.

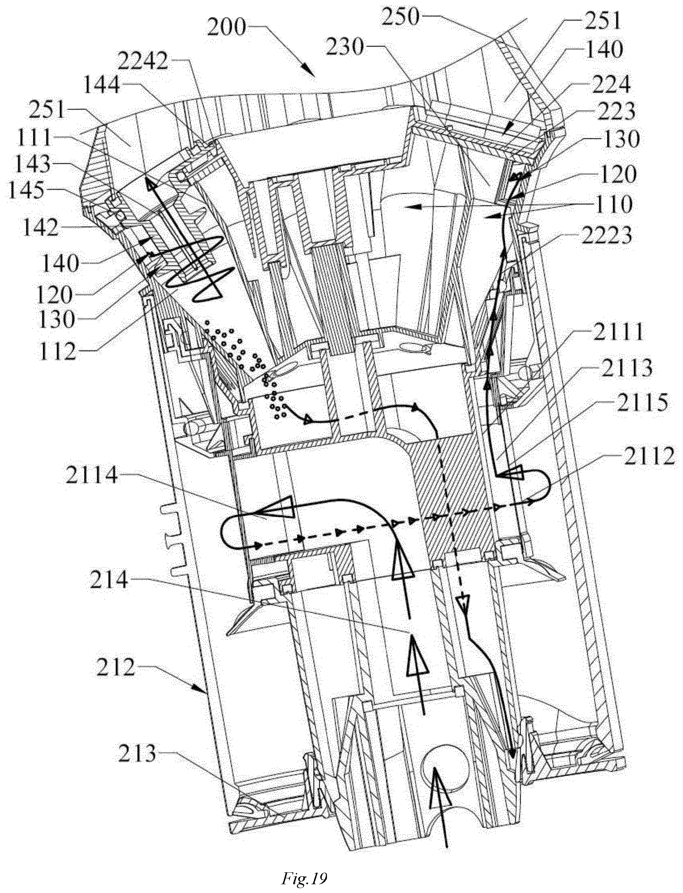

Referring to Figs. 18 and 19, the cyclonic separating apparatus further includes a cyclonic separator cover 250 connected to an upper portion of the cyclonic separator support 222, and the cyclonic separator cover 250 is provided with a cyclonic separator outlet pipe 251. Specifically, an edge of the cyclonic separator cover 250 props against the upper edge of the cyclonic separator support 222 in a sealing manner, and the cyclonic separator outlet pipe 251 abuts against the cover plate member 224 and/or the overflow drums 140, and preferably but unlimitedly, abuts against the overflow drums 140 to facilitate a rapid discharge of separated clean airflows. Meanwhile, the positions of the overflow drums 140 with respect to the cyclonic separating drums 110 are pressed and limited to avoid the problems of poor separation effect caused by loosening and movement of the overflow drums 140 during the use, transfer and the like of the cyclonic separating apparatus. The clean airflows discharged from the overflow drums 140 are combined into one airflow in the cyclonic separator cover 250 to be discharged from and exit the cyclonic separating apparatus.

By arrangement of the above sealing element 223, the cover plate member 224 and the positioning structure, the configuration automatically provides good alignment and reliable sealing between the overflow drums 140 and the cyclonic separating drums 110 as well as the air introducing ports 230 as well as good alignment between the tangential air ducts 120 and the curved ducts 130.

It should be realized that the tangential air ducts 120 and the cyclonic separating drums 110 of the cyclonic separators 100, and the cyclonic separator support 222 are integrally formed into a main body of the downstream cyclonic separating assembly 220, and the air introducing ports 230 are formed by enclosing of the adjacent cyclonic separating drums 110. In specific implementation, the main body of the downstream cyclonic separating assembly 220 and the overflow drums 140 are separately manufactured so as to simplify manufacturing and assembling of the cyclonic separating apparatus.

Referring to Figs. 18 and 19, the upstream cyclonic separating assembly 210 includes a dust control housing 212 carrying a separation drum 211 and a dust collection cover 213, wherein the separation drum 211 includes an inner drum 2111 and an outer drum 2112 nested about the same axis 150. A tangential inlet 2114 is formed in an side wall of the inner drum 2111, one end of the tangential inlet 2114 communicates with a vertical air inlet duct 214 and the other end of the tangential inlet 2114 communicates with the outside of the outer drum 2112. That is, a dirty airflow enters through the vertical air inlet duct 214, is redirected through the tangential inlet 2114 to enter an upstream separation region between the outer drum 2112 and the dust control housing 212. Preferably, a filter mesh 2115 is arranged on a side wall of the outer drum 2112 to further prevent part of the particles from entering the outer drum 2112. The vertical air inlet duct 214 is arranged in the inner drum 2111. The dust collection cover 213 is detachably connected to a lower portion of the dust control housing 212. Preferably, the dust collection cover 213 is provided with an escape space to facilitate the passage of the vertical air inlet duct 214. In specific implementation, the dirty airflow enters from the vertical air inlet duct 214, and enters the upstream separation region through the tangential inlet 2114, and the dirty airflow carrying particles is conveyed in a direction tangential to a side wall of the dust control housing 212 to the separation region of the upstream cyclonic separating assembly 210 to form a rotating airflow, the rotating spiral airflow causes part of larger particles carried in the airflow to be separated from the airflow, and the separated airflow flows through the filter mesh 2115 and then enters a compartment 2113 between the outer drum 2112 and the inner drum 2111. Further, a lower portion of the side wall of the dust control housing 212 and the dust collection cover 213 together form a collector for particles such as dirt and dust separated by the upstream cyclonic separating assembly 210. The dust control housing 213 is detachably connected to the side wall of the dust control housing 212. The collector may discharge all of the separated particles by a user opening a base.

An upper portion of the dust control housing 212 is connected to the cyclonic separator support 222. Preferably, a lower side edge of the cyclonic separator support 222 leans on and is positioned at an upper edge of the dust control housing 212. An upper portion of the separation drum 211 is connected to the cyclonic separator support 222. Specifically, the ring wall 2221 of the cyclonic separator support 222 and an inner sealing ring 2222 form an airflow guide cavity 2223, i.e., the air guide path. The compartment 2113 in the separation drum 211 is in a sealed communication with the airflow guide cavity 2223 to provide a communication path between the upstream cyclonic separating assembly 210 and the downstream cyclonic separating assembly 220. More preferably, the compartment 2113 is in communication with the airflow guide cavity 2223 via a connecting cavity. The down standing cone drums 112 of the cyclonic separators 100 in the downstream cyclonic separating assembly 220 are arranged on a dust discharge passage communicating with the dust collection cover 213.

### Embodiment 4

A method for manufacturing the cyclonic separating apparatus described in Embodiment 3, including: manufacturing a first component including a cyclonic separator support 222, and a plurality of cyclonic separating drums 110 and tangential air ducts 120 arranged on the cyclonic separator support 222, the tangential air ducts 120 being in tangential communication with the cyclonic separating drums 110; and manufacturing a second component including a plurality of overflow drums 140 with curved ducts 130.

Further, the method for manufacturing the cyclonic separating apparatus further includes the step of assembling the first component and the second component through a cover plate member 224, i.e., assembling the overflow drums 140 in upper portions of the cyclonic separating drums 110 about the same axis 150; and using a positioning structure to position the second component in a predetermined position and/or orientation with respect to the first component, thus correspondingly communicating the curved ducts 130 of the overflow drums 140 with the tangential air ducts 120. Specifically, entrances 131 of the curved ducts 130 are set to be positioned at tangential air outlets 125 of the tangential air ducts 120. Exits 132 of the curved ducts 130 are set to be positioned at connections 113 of cylindrical drums 111 and down standing cone drums 112 or at upper portions of the down standing cone drums 112.

Further, the method for manufacturing the cyclonic separating apparatus further includes the step of assembling the downstream cyclonic separating assembly and the upstream cyclonic separating assembly.

### Embodiment 5

A cleaning appliance includes the above cyclonic separating apparatus of Embodiment 3 or the cyclonic separating apparatus manufactured by the manufacturing method of Embodiment 4. The appliance does not have to be a drum-type vacuum cleaner. The present invention is applicable to other types of vacuum cleaners, such as drum machines, wand type vacuum cleaners or hand-held vacuum cleaners.

In the description of the present invention, it should be understood that the terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" and the like indicate the orientation or positional relationship based on the orientation or positional relationship shown in the accompanying drawings, are only for the convenience of describing the present invention and simplifying the description, rather than indicating or implying that the device or component needs have a specific orientation, and needs to be configured and operated in the specific orientation, and therefore, cannot be construed as limiting the present invention.

In addition, the terms "first" and "second" are only used for descriptive purposes, and cannot be understood as indicating or implying relative importance or implicitly indicating the number of indicated technical features. Therefore, the features defined with the terms "first" and "second" may explicitly or implicitly include at least one of the features. In the description of the present invention, the term "a plurality of" means at least two, such as two, three, etc., unless otherwise definitely defined.

In the present invention, unless otherwise clearly specified and limited, the terms "install", "join", "connect", "fix", "communicate" and other terms should be understood in a broad sense. For example, it may be a fixed connection, a detachable connection or an integrated connection; it may be a mechanical connection, an electrical connection or possibility to communicate with each other; it may be a direct connection or an indirect connection through an intermediate medium; it may be an internal communication between two components or an interactive relationship therebetween, unless otherwise definitely defined. Those of ordinary skill in the art may understand specific meanings of the terms in the present invention according to specific circumstances.

Obviously, the embodiments described above are only part of the embodiments of the present invention, instead of all of them. The accompanying drawings show preferred embodiments of the present invention, but do not limit the protection scope of the present invention. The present invention may be implemented in many different forms. On the contrary, the purpose of providing these embodiments is to make the disclosure of the present application be understood more thoroughly and comprehensively. Although the present application has been described in detail with reference to the above embodiments, those skilled in the art can still modify the technical solutions described in the above specific embodiments, or equivalently replace some of the technical features. All the equivalent structures, which are made using the contents of the description and the accompanying drawings of the present application, and are directly or indirectly used in other related technical fields, still fall within the protection scope of the present application.

## Claims

1. A method for cyclonic separation and discharging of dust, **characterized by** comprising the steps of:
guiding air with particles to form an airflow consistent with a tangential direction of a cyclonic separating drum and then making the airflow to enter the cyclonic separating drum tangentially to form a rotating airflow; and
changing a direction of a centripetal force of the rotating airflow to a direction above a side of a direction of a support force of a drum wall of the cyclonic separating drum or adjusting the direction of the support force of the drum wall of the cyclonic separating drum to below the side of the direction of the centripetal force of the rotating airflow, thus making the particles be subjected to a downward component force directed towards a dust discharge port of the cyclonic separating drum to pull and discharge separated particles.

2. The method for cyclonic separation and discharging of dust according to claim 1, **characterized in that** the step of guiding air with particles to form the airflow consistent with the tangential direction of the cyclonic separating drum and then making the airflow enter the cyclonic separating drum tangentially to form the rotating airflow is realized by communicating an upper side edge of the cyclonic separating drum with a tangential air duct.

3. The method for cyclonic separation and discharging of dust according to claim 1 or 2, **characterized in that** the step of changing the direction of the centripetal force of the rotating airflow to above the side of the direction of the support force of the drum wall of the cyclonic separating drum is realized by arranging a centripetal force redirecting duct in an upper portion of the cyclonic separating drum.

4. The method for cyclonic separation and discharging of dust according to claim 1, **characterized in that** the tangential air duct has an airflow guide path.

5. The method for cyclonic separation and discharging of dust according to claim 2 or 4, **characterized in that** an outer side wall of the tangential air duct is a planar side wall, and is tangent to a side edge of a cylindrical drum of the cyclonic separating drum; or, the outer side wall of the tangential air duct is a curved side wall, and is tangent to the side edge of the cylindrical drum of the cyclonic separating drum.

6. The method for cyclonic separation and discharging of dust according to claim 5, **characterized in that** an inner side wall of the tangential air duct is a planar side wall or a curved side wall.

7. The method for cyclonic separation and discharging of dust according to claim 3, **characterized in that** the centripetal force redirecting duct is a spirally extending curved duct whose spiral rise angle A is greater than a half cone angle a of a down standing cone drum of the cyclonic separating drum.

8. The method for cyclonic separation and discharging of dust according to claim 7, **characterized in that** a lead of the curved duct is set to be less than one.

9. The method for cyclonic separation and discharging of dust according to claim 7, **characterized in that** the curved duct is set to have at least 1/4 lead.

10. The method for cyclonic separation and discharging of dust according to claim 1, **characterized in that** the step of adjusting the direction of the support force of the drum wall of the cyclonic separating drum to below the side of the direction of the centripetal force of the rotating airflow is realized by adjusting a down standing cone drum of the cyclonic separating drum to an upstanding cone drum.
